# EUROPÄISCHE PATENTANMELDUNG

(11) **EP 2 759 419 A1**
(43) Veröffentlichungstag der Anmeldung: **30.07.2014**
(21) Anmeldenummer: 13152295.5
(22) Anmeldetag: 23.01.2013
(51) Int. Cl.: B60C 23/06

(54) **Sensor und Sensorarray**

(71) Anmelder: Technische Universität Darmstadt, 64285 Darmstadt (DE)
(72) Erfinder: Dimitrov, Martin, 63322 Rödermark (DE); Stapp, Dennis, 63225 Langen (DE)
(74) Vertreter: Katscher Habermann Patentanwälte

(57) **Zusammenfassung**

Die Erfindung betrifft einen Reifensensor im Inneren der Lauffläche des Reifens zur Messung von Normalspannung- und Biegemomente mit mindestens einem bruchsicheren Dünnfilmelement aus einem piezoelektrischen Polymer oder einem Dielektrikum zur Durchführung der Messung.

## Beschreibung

Die vorliegende Erfindung betrifft einen Sensor und ein Sensorarray für die Messung der auf einen Reifen wirkenden Kräfte und Momente.

Der Reifen eines Rades stellt den äußeren Umfang und die Lauffläche dar. Er überträgt die Kräfte zwischen Felge und Fahrbahn. Als Reifenaufstandsfläche oder Latsch wird die Fläche des Reifens bezeichnet, die Kontakt zum Boden hat.

Im Automobilbereich wächst die Komplexität von Sensorik und Hilfssystemen kontinuierlich mit dem Ziel Sicherheit, Komfort oder Fahrdynamik zu verbessern. Hierzu sind im Stand der Technik verschiedene Möglichkeiten beschrieben, die Kräfte und Momente auf dem Reifen mit Sensoren zu erfassen.

Es gibt Messräder für wissenschaftliche Anwendungen, bei der die Kräfte und Momente sehr aufwendig an der Nabe gemessen werden. Außerdem existieren Sensoren zur Erfassung der Reifendeformationen. Diese Messvorrichtungen werden nicht im normalen Straßeneinsatz eingesetzt.

Der Sensor zur Erfassung von Kräften und Momenten in einem Reifen wird üblicherweise an der Innenseite des Reifens positioniert. Dabei werden die kinematischen Änderungen des Reifens aufgenommen und mittels Modellen die Reifenkräfte und Momente berechnet Dabei werden die sicherheitsrelevanten Messgrößen nur indirekt gemessen. Beispiele dafür sind ABS und ESP Systeme. Hier wird der Straßenreibwert indirekt über die Drehzahl der Räder gemessen. Es wird dabei unterschieden zwischen momentanem und maximalem Reibwert. Der momentane Reibwert ist das Verhältnis zwischen der Normalkraft zur Straße und der Quer- bzw. Längskraft. Aktuelle Systeme können nur mittels Modellen den Reibwert abschätzen und das nur wenn der momentane Reibwert die Größe des maximalen Reibwertes erreicht hat. d.h. erst dann, wenn das Fahrzeug am Rande der physikalische Stabilität ist. I.d.R. sind die Eingangsgrößen für die Modelle nicht die tatsächlich wirkende Kräfte im Reifenlatsch, sondern Messgrößen wie Raddrehzahl oder Gierrate des Fahrzeuges.

Diese Systeme regeln die Bremskraft dadurch erst, wenn Räder bereits blockieren und das Fahrzeug somit bereits über die physikalischen Grenzen der Stabilität ist.

In DE200803549A1 wird ein Sensor aus einer piezoelektrischen Keramik vorgeschlagen, dieser weist den Nachteil auf, dass er nicht bruchsicher ist. Dies ist besonders der Fall, wenn ungleichmäßig Kräfte auf den Reifen einwirken z.B. bei der Fahrt über unbefestigte Straßen mit Schlaglöchern, Ästen und spitzen Steinen. Des Weiteren befindet sich der Sensor an der Innenseite des Reifens wodurch die Messung der auf den Reifen wirkenden Kräfte nur indirekt erfolgt.

Aktive Fahrsicherheitssysteme wie ESP und ABS erfassen mittels Lenkwinkelsensor, Beschleunigungssensoren und Raddrehzahlsensoren die Diskrepanz zwischen angestrebter und tatsächlicher Fahrzeugtrajektorie. Ihre Funktion ist einzugreifen, wenn durch Verlust der Fahrzeugstabilität eine Abweichung der gewünschten und tatsächlichen Fahrbahn entsteht. Fahrzeugstabilitätsverlust bedeutet, dass der maximale Reibwert des Reifens/Fahrbahn überschritten ist und einer oder mehrere Reifen in die Gleitreibung übergehen. Hieraus folgen der abrupte Verlust der lateralen Führungskräfte, ein Anwachsen des Reifenschlupfes sowie eine Reduktion der Verzögerungskräfte. Der tatsächliche Reifenschlupf und die Reibkraftreserve kann mittels aktueller straßentauglicher Sensoren nicht direkt erfasst werden. Deshalb können aktuelle Fahrsicherheitssysteme nur reaktiv in die Fahrstabilität eingreifen. Mit anderen Worten, der Fahrer wird durch die Systeme erst dann gewarnt und/oder unterstützt, wenn er die Kontrolle über das Fahrzeug bereits verloren hat und evtl. ein Unfall aufgrund der limitierten Fahrphysik nichtmehr zu vermeiden ist.

Der Erfindung liegt die Aufgabe zugrunde, einen stabilen bruchsicheren Reifensensor und ein Sensorarray zu entwickeln und so die vorgenannten Nachteile im Stand der Technik zu beseitigen.

Diese Aufgabe wird durch einen erfindungsgemäßen Reifensensor gelöst.

Der Reifensensor, ist dabei in das Innere der Lauffläche des Reifens eingebaut. Dadurch werden die Radkräfte und Momente direkt im Latsch, der Kontaktstelle zwischen Reifen und Straße gemessen. Die Messung von Kräften und Momenten, Schwingungen und Deformationen erfolgt durch das Sensorarray direkt und mit hoher zeitlicher und örtlicher Auflösung. Die einzelnen Pixel des Arrays sind hierzu über den Umfang des Reifens verteilt und können ein oder mehrreihig angeordnet sein.

Dieser Reifensensor umfasst mindestens ein bruchsicheres piezoelektrisches und/oder mindestens ein bruchsicheres kapazitives Dünnfilmelement das Normalspannung- und Biegemomente direkt in eine elektrische Ladungsumverteilung d.h. eine Spannung beziehungsweise Kapazitätsänderung umgesetzt. Dieser Wert wird beispielsweise über ein Funkelement zu einem Auswerteelement gesendet. Das piezoelektrische Dünnschichtelement umfasst ein bruchfestes piezoelektrisches Polymer beispielsweise aus Polyvinylidenfluorid (PVDF). Das piezoelektrische Dünnschichtelement wird in einer Stärke im Mikrometerbereich als eine Folie gefertigt (bevorzugt sind Schichtdicken von 10 bis 1000 µm besonders bevorzugt 10 bis 100 µm), so dass auch die Gesamtdicke des Sensors in diesem Bereich liegt. Aus der geringen Dicke und der größeren Steifigkeit ergibt sich eine hohe Eigenfrequenz des Sensors im Bereich von mehreren hundert MHz. Dies ermöglicht eine hohe zeitliche Auflösung der Messung. Das piezoelektrische Dünnschichtelement dient der piezoelektrischen Messung der Normalspannungs- und Biegemomente.

Das kapazitive Dünnschichtelement umfasst ein bruchfestes, elastisches Dielektrikum mit wenigstens zwei Elektroden. Dabei ist grundsätzlich jedes dielektrische Material geeignet, das sich bei den am Einsatzort wirkenden Kräften stark genug verformt, um eine detektierbare Kapazitätsänderung zu bewirken und das stabil genug für einen Dauereinsatz in einem Reifen ist. Bevorzug geeignet sind dielektrische Polymere wie beispielsweise Polyethylen, Polytetrafluorethylen, Polytetrafluorethylenpropylen, Polypropylen oder Polyethylenterephthalat. Diese sind vorzugsweise als Schäume ausgebildet, um so die Volumenänderung unter Krafteinwirkung und somit die Signalstärke zu vergrößern. Das kapazitive Dünnschichtelement dient der kapazitiven Messung der Normalspannung- und Biegemomente.

Das kapazitive Dünnschichtelement wird in einer Stärke im Mikrometerbereich als eine Folie gefertigt (bevorzugt sind Schichtdicken von 10 bis 1000 µm besonders bevorzugt 50 bis 100 µm), so dass auch die Gesamtdicke des Sensors in diesem Bereich liegt. Es umfasst zwei Elektroden und bildet ein kapazitives Sensorelement. Das Sensorarray wird somit aus kapazitiven Sensorelementen aufgebaut. Dies ermöglicht die Erfassung von statischen Messgrößen mit hoher Präzision. Die Messung des statischen Reifendruckes wird dadurch einfacher.

In einer Ausführungsform der Erfindung wird der Reifensensor als ein durchgehendes Band, rechteckig, rund oder als Streifen ausgebildet. Die Formgebung wird danach angepasst welche Kräfte und Momente der Sensor erfassen soll. Die Auflistung verschiedener Formen ist hierbei nicht abschließend zu verstehen.

In einer Ausführungsform der Erfindung wird mit mindestens einem erfindungsgemäßen Sensor ein Sensorarray konstruiert. Ein Sensorarray stellt ein Messfeld dar und besteht dabei aus mindestens einem Sensor in mindestens einem Reifen.

Ein Sensor kann mehrere Sensorelemente umfassen, beispielsweise um Kräfte entlang verschiedener Raumachsen zu bestimmen. Das Sensorarray erfasst die Reifen-Straßen Interaktion und dadurch die Indikation fahrdynamikrelevanter Größen wie Latschlänge, Reifendruck, Radlast, Stoßdämpfer-Überwachung, Winkelgeschwindigkeit einzelner Räder, Reifenrückstellmoment und Körperschall. Diese Aufzählung stellt nur eine beispielhafte Auswahl da.

Die Messung der Latschgröße wird durch Auswertung der Anzahl von Messpixel oder Sensoren, die sich in der elastisch verformten Zone der Reifen befindet, ermittelt. Hierzu kann auch die charakteristische Verformung eines Pixels zwischen Kontakteintritt und Austritt mit Hilfe der Raddrehzahl genutzt werden. Weiterhin wird aus der z-Richtung eines Messpixels der Druck in dem Reifen gemessen und daraus kann der Latschgröße sowie die Radlast bestimmt werden. Aus der Ausschwingzeit bei einer Anregung aus dem Strassenprofil oder der Fahrdynamik werden die Stoßdämpfer auf Alterung oder Beschädigung geprüft und der Fahrer wird vorzeitig gewarnt. Die Messdaten aus dem Sensorarray liefern durch einfache Datenbearbeitung die Drehzahl des einzelnen Reifens sowie nach Integration der Querkraft aus einzelnen Pixel die Rückstellmomente des Reifens. Durch den Einsatz des Sensors werden die Bremsanlage und die Bremskraftverteilung online während des Betriebs überwacht, indem die Kräfte in Abrollrichtung aller Räder gemessen und verglichen werden. Im Fall von unregelmäßigem Betrieb wird der Fahrer gewarnt und/oder die Werkstatt informiert. Auch der Reifendruck kann mit dem Sensor gemessen und überwacht werden.

Beispielsweise weist ein Sensorarray zwei oder mehr Reifensensoren auf, die am Umfang des Reifens verteilt sind. Dies erhöht die örtliche Auflösung des Sensorarrays. Dadurch, dass dem Sensorarray gleichzeitig die Informationen aus mehreren Messpixeln in der Latsch zur Verfügung stellen, können weitere wichtige physikalische Größen wie Einstellwinkel, Schlupf, Reibwert der Straße bestimmt werden.

Der Anteil der Reifensensoren, die sich momentan nicht in der Latsch befinden, kann zusätzlich als Körperschallsensoren benutzt werden, um Informationen über die Straße zu erfassen.

In einer weiteren Ausführungsform der Erfindung ist das Funkelement aus Polymerelektronik ausgebildet. Dies dient dazu den Sensor insgesamt bruchsicher zu gestalten was bei einer Siliziumelektronik nicht in diesem Maße der Fall ist.

In einer weiteren Ausführungsform umfasst das Auswerteelement für einen Reifensensor einen Sender zur Energieversorgung des Funkelementes, einen Empfänger zum Empfang der Sensordaten und der Sensoridentifikation sowie eine Auswertungseinheit beispielsweise einen Mikrocontroller zur Auswertung der Daten.

Da der Reifensensor alle benötigten Daten zur Bestimmung des maximalen und des aktuellen Reibwertes der Straße-Reifen Interaktion liefert, wird diese berechnet und wenn die aktuelle Reibkraftreserve eine minimale Grenze unterschreitet, wird der Fahrer gewarnt und/oder aktiv in die Dynamik des Kraftfahrzeuges eingegriffen. Das Sensorarray stellt auch den maximalen Reibwert und somit den notwendigen Bremsweg sowie den minimalen Kurvenradius für die die aktuelle Fahrsituation als Information zu Verfügung.

Diese Informationen werden entweder dem Fahrer direkt oder in bearbeiteter Form (z.B. der maximale Reibwert umgerechnet in eine maximale sichere Geschwindigkeit) zur Verfügung gestellt (z. B. über eine Anzeige im Display) und/oder durch Vernetzung mit weiteren Sensoren dazu beitragen die Sicherheit und den Funktionsumfang bspw. von automatischen Abstandskontrollsystemen und Geschwindigkeitsreglern zu erhöhen. Insbesondere das in Kurven gefährliche Unter- oder Übersteuern eines Fahrzeuges bspw. durch Bremsen oder Beschleunigen kann durch den Sensor vermieden werden. Ein beispielhafter Anwendungsfall hierfür ist, dass ein Fahrzeug in der Kurve bei Erreichen der Sicherheitsreibwertgrenze die Gasannahme so reduziert bzw. das Fahrzeug soweit abgebremst, dass das Fahrzeug nicht ins Schleudern gerät. Wenn der Kurvenradius bspw. durch Spurverfolgung oder durch ein kartengestütztes Navigationssystem bereits vor Eintritt in den Kurvenbereich bekannt ist, dann kann die Warnung bzw. das Eingreifen noch vor Einfahrt in die Kurve erfolgen.

Der Reifensensor liefert auch Informationen über Radschlupfwinkel sowie Radschlupf. Die Daten können zum Aufbau eines neuen Stabilitätsprogramms, das EPS und ABS vereinigt und viel früher als heute bekannte Software in die Stabilität des Fahrzeugs eingreifen, dienen.

Durch die Messung von Körperschall werden Änderungen der Straßenverhältnisse, Defekte im Reifen oder andere Anomalien, die zu Gefahr werden können, detektiert.

Durch das erfindungsgemäße Sensorarray werden der Reifenschlupf und die Reibwertreserve während der Fahrt erfasst und in "Echtzeit" zur Signalverarbeitung dem Sicherheitssystem zur Verfügung gestellt werden.

Durch Einbindung dieser Daten und bspw. den Abgleich mit weiteren Sensoren (Spurerkennung, GPS Straßenkarte usw.) wird ein drohender Stabilitätsverlust frühzeitig vor Eintreten detektiert und rechtzeitig Gegenmaßnahmen eingeleitet. Es wird dabei eine Warnung an den Fahrer oder eine Intervention des Systems erfolgen solange die physikalischen Grenzen eine Vermeidung des Kontrollverlustes oder gar eines Unfalls noch ermöglichen.

Die Fertigung des Reifensensors erfolgt beispielsweise durch Einbringen des piezoelektrischen bzw. dielektrischen/kapazitiven Dünnschichtelements zwischen zwei Elektroden, die auf einer Flexiblen Platine oder Polymerelektronik angebracht sind. Die Flexible Platine oder Polymerelektronik dient als Wandlerelement um die erzeugten Signale in auswertbare Daten umzuwandeln. Dieser Aufbau wird mit dem Reifen oder einem Trägerprofilteil vulkanisiert, eingegossen oder verklebt. Eine weitere Möglichkeit ist, dass die Dünnschichtelemente (Folie) mit integrierten Elektroden in eine TPE-Hülle (Thermo-Plastische-Elastomer) eingespritzt werden und diese in den Reifen integriert wird.

Eine andere Fertigungsmethode insbesondere für das Einbringen von dielektrischen Dünnschichtelementen in den Reifen sieht vor, dass vor der Vulkanisierung die flexible Platine auf dem Rohling angebracht wird. An den Stellen wo sich die Sensoren später befinden sollen, wird die Platine frei von Gummi gehalten (vorzugsweise Kanban oder ein anderes Wärme abweisende Material). Anschließend wird der Reifen vulkanisiert. Die Stellen werden von dem Schutzmaterial befreit und die Profilelemente werden auf die freien Stellen geklebt. Das Profilelement weist dabei schon eine Elektrode und ein kapazitives Dünnschichtelement (das als Befestigungsmittel dient) auf.

Bevorzugte Ausführungsbeispiele der vorliegenden Erfindung werden nun anhand der beigefügten Zeichnungen näher erläutert. Dabei zeigen:
**Fig.1****.** den Aufbau eines Reifes mit kapazitiven Dünnschichtelementen als Sensor
**Fig. 2** den Aufbau des piezoelektrischen Reifensensorarray mit Biege- und Normalspannungssensoren
**Fig.3** das Prinzip eines Sensors auf Basis eines kapazitiven Elements
**Fig. 4** ein piezoelektrisches Messpixel mit 5 Sensorflächen zur Erfassung aller Reifenkräfte
**Fig.5** ein kapazitives Messpixel mit 5 Sensorflächen zur Erfassung aller Reifenkräfte und Momente
**Fig. 6** Weiterleitung des Messsignals zu einer Auswerteeinheit.

In der nachfolgenden Beschreibung sind weitere Aspekte und Ausführungsbeispiele der vorliegenden Erfindung offenbart. Zudem wird auf die beigefügten Zeichnungen, die einen Teil derselben bilden, und in denen mittels Veranschaulichung ein oder mehrere Beispiele, bei denen die Erfindung praktiziert werden kann, gezeigt sind, Bezug genommen. Diese Offenbarung der Erfindung soll die Merkmale oder Hauptelemente der Erfindung nicht auf ein spezifisches Ausführungsbeispiel beschränken. Vielmehr können die verschiedenen Elemente, Aspekte und Merkmale, die in den Ausführungsbeispielen offenbart sind, durch einen Fachmann auf dem Gebiet auf verschiedene Arten kombiniert werden, um einen oder mehrere Vorteile der vorliegenden Erfindung zu erzielen. Es sei darauf hingewiesen, dass andere Ausführungsbeispiele verwendet werden können, und strukturelle oder logische Veränderungen vorgenommen werden können, ohne von dem Schutzbereich der vorliegenden Erfindung abzuweichen. Gleiche Bezugszeichen bezeichnen entsprechende ähnliche Teile.

Es existieren verschiedene Möglichkeiten ein Messpixel eines Sensorarrays zu realisieren, da die Geometrie der Messpixel des Sensorarrays grundsätzlich nicht eingeschränkt ist. Im Folgenden werden verschiedene Bauformen eines einzelnen Sensors beschrieben. In einem Array kann entweder in nur einer oder einer Kombinationen verschiedener Bauformen von Sensorelementen ausgebildet sein.

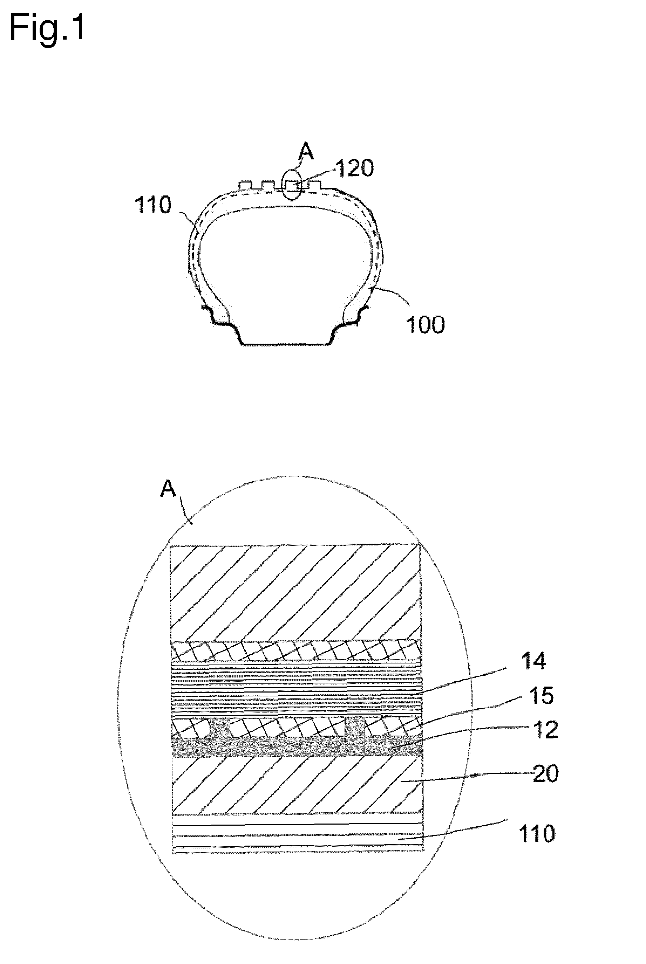

**Fig.1** zeigt den allgemeinen Aufbau eines Reifens **(100)** und Ausschnitt A die Position eines Sensors **(10),** in diesem Beispiel eines kapazitiven Sensors, innerhalb der Lauffläche **(20)** des Reifens. Dieser Sensor befindet sich in den zur Lauffläche **(20)** des Reifens **(100)** gehörenden Profilelementen **(120)** und besteht aus einem Dielektrikum **(14)** zwischen zwei Elektroden **(15)** und dem mit diesen verbundenen Wandlerelement **(12).**

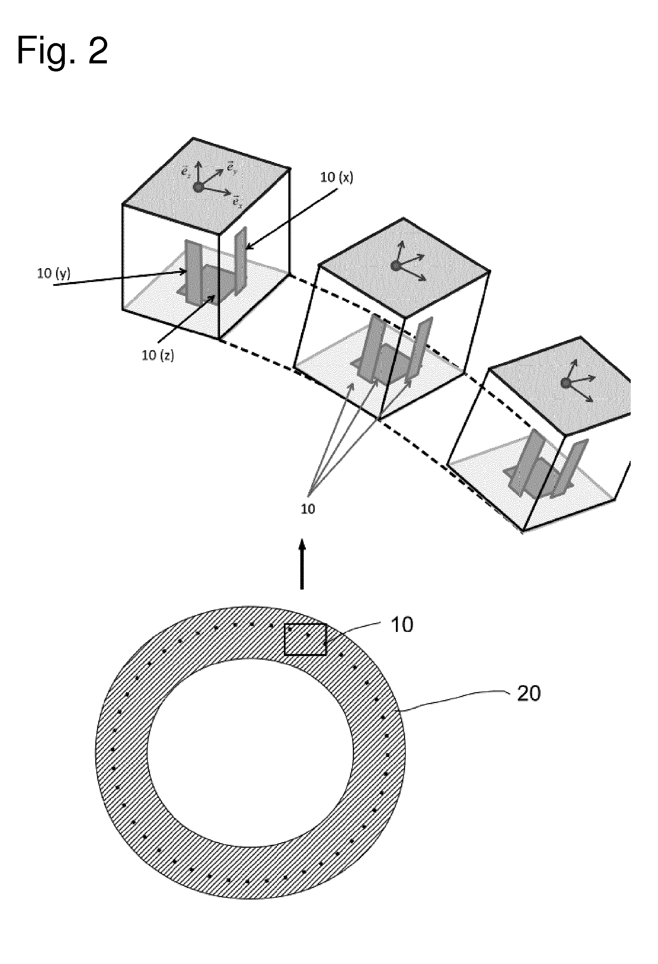

**Fig. 2** zeigt eine erste Bauform des Sensors **(10),** innerhalb der Lauffläche **(20)** eines Reifens. In dieser Bauform besteht jeder Sensor **(10)** des Sensorarrays aus bis zu drei Sensorelementen, jeweils für die x-, y-, und z-Richtung **(10 (x), 10 (y),10 (z))** Die Sensorelemente für die x- und y-Richtung **(10 (x), 10 (y)** messen die Biegespannung. Das Sensorelement **(10 (z))** für die z-Richtung misst die mechanische Normalspannung. Hier nicht abgebildet sind die, neben den Sensorelementen, **(10 (x), 10 (y),10 (z)),** ebenfalls zum Sensor gehörenden elektrischen, beispielsweise mittels Polymerelektronik umgesetzten, Bauteile zur Umsetzung der durch die Ladungsverschiebung in der piezoelektrischen/dielektrischen Folie resultierenden Spannung in ein auswertbares Signal.

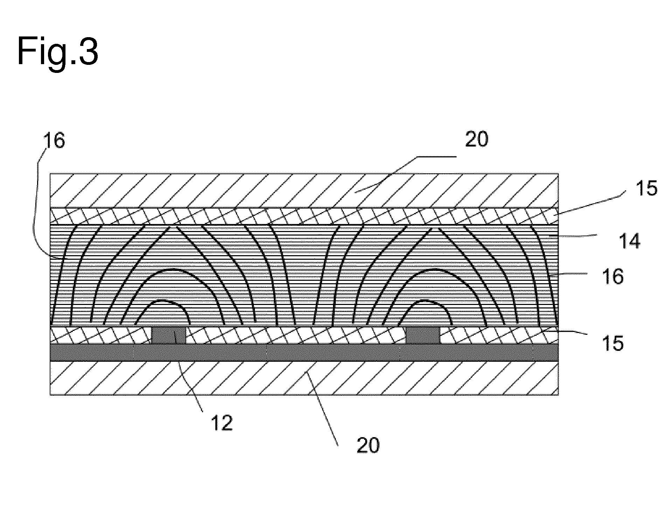

**Fig. 3** zeigt eine Prinzipskizze eines Sensors (10) auf Basis eines kapazitiven Sensors (13). Die zwei Feldlinienfelder (16) bilden die zwei aufgeklappten Kondensatoren. Wenn die Elektrode (15) geneigt/gekippt wird ändern sich die Dichten der Feldlinien, also der Kapazität der beiden Kondensatoren. Dies führt zu einem Signal welches mit dem Auswerteelement (12) weiterverarbeitet wird.

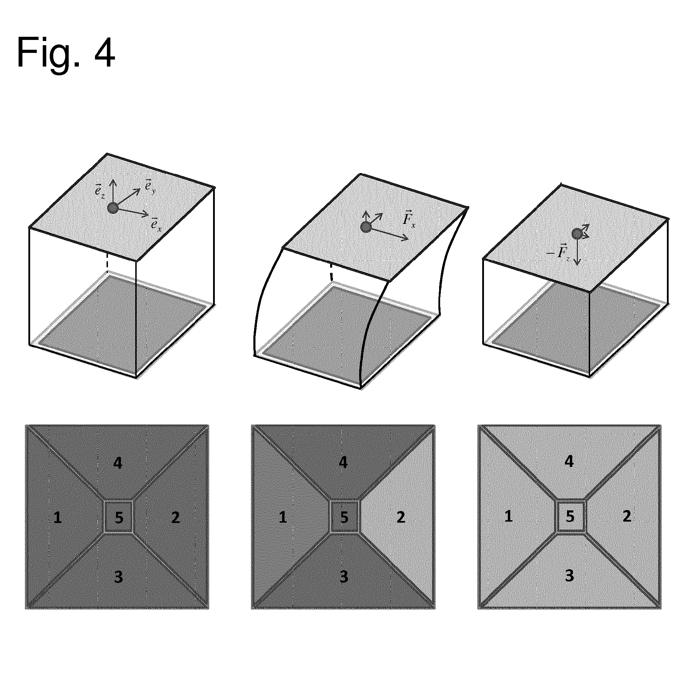

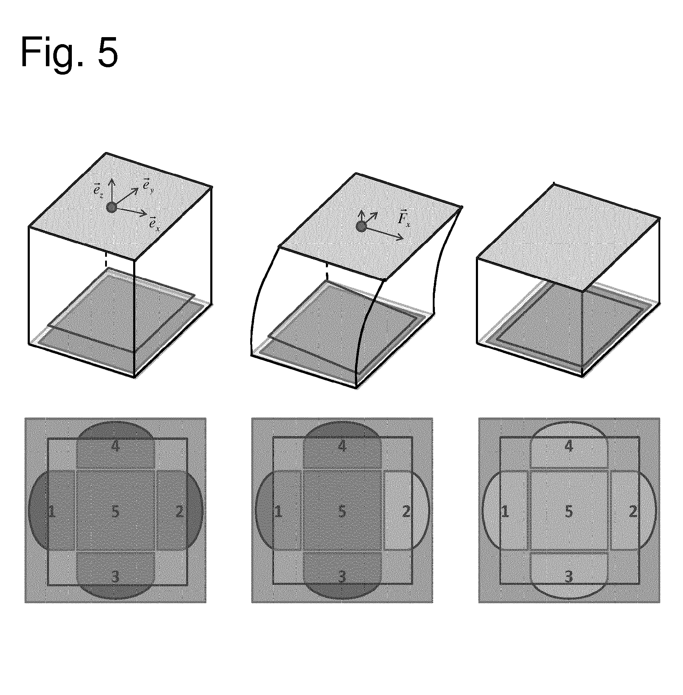

**Fig. 4** und **5** zeigen eine zweite Bauform. In Figur 4 weist diese Bauform Sensoren aus piezoelektrischen Dünnschichtelementen in Figur 5 aus dielektrischen Dünnschichtelementen (mit Elektroden), auf. In beiden Fällen dient eine Spannung als Messwert. Diese Spannung wird in piezoelektrischen Dünnschichtelementen aus der Ladungstrennung durch mechanische Spannung generiert und in piezoelektrischen Dünnschichtelementen aus Kapazitätsänderungen. In dieser Bauform besteht der Sensor aus mindestens 2 Dehnungssensorelementen. Die Sensorelemente sind flächig entweder unterhalb oder im Profilelement angeordnet und messen die mechanische Spannung bzw. Dehnung im Profilelement. Wird das Profilelement flächig homogen in e̅_{z} Richtung belastet, dann wird die mechanische Spannung an jedem Sensorelement gleichermaßen gemessen. Wird das Profilelement in eine Richtung gebogen, ergibt sich eine Differenz der gemessenen mechanischen Spannungen bzw. Dehnungen an Element **1** und **2.** Jeder kombinierte Belastungszustand aus Druck und Biegung, bildet ein Messsignal als Superposition aus einem Offset beider Elemente und einer Differenz zwischen beiden. In Kombination mit Element **3** und **4** wird zusätzlich die Biegerichtung des Elements gemessen. Mit Hinzunahme von Element **5** wird der der flächige Druckanteil ohne den Einfluss der Biegung gemessen.

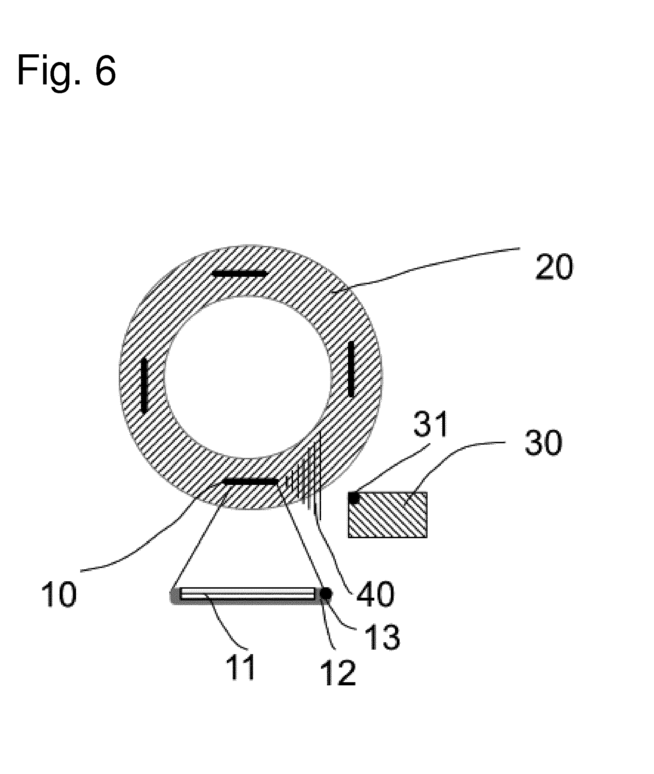

**Fig. 6** zeigt wie das Messsignal zu einer Auswerteeinheit im Inneren des Fahrzeugs weitergeleitet wird. Hierzu wird die elektrische Ladung der piezoelektrischen Folie **(11)** im Sensor **(10)** aus einer Polymerelektronik oder flexibler Platine konstruierten Ladungsverstärker als Wandlerelement **(12)** in ein digitales elektrisches Signal umgewandelt, zu einem Funkelement mit Antenne **(13)** geleitet und in ein Funksignal **(40)** umgewandelt. Hierzu wird eine Antenne wie sie zum Beispiel auch in RFID Technologie verwendet wird. zusammen mit einer Sensoridentifikation (ID), welche der Auswerteeinheit (nicht abgebildet) in einem Auswertungselement **(31)** eine Zuordnung des Sensors ermöglicht, zu einem Auswerteelement **(31)** im Fahrzeuginneren gesendet. Hier erfolgt die Auswertung mittels einer Auswertungselektronik. Die Kopplung geschieht durch vom Auswerteelement **(31)** erzeugte magnetische Wechselfelder geringer Reichweite oder durch hochfrequente Radiowellen. Damit werden nicht nur Daten übertragen, sondern auch das Wandlerelement **(12)** welches beispielsweise aus Polymerelektronik besteht und die Antenne **(13)** mit Energie versorgt.

### Bezugszeichenliste

- 1, 2,3,4,5: Sensorelement
- 10: Sensor
- 10 (x): Sensorelement für die x- Richtung
- 10 (y): Sensorelement für die y- Richtung
- 10 (z): Sensorelement für die z- Richtung
- 11: piezoelektrisches Dünnfilmelement
- 12: Wandlerelement
- 13: Antenne des Sensors
- 14: Dielektrikum
- 15: Elektrode
- 16: Feldlinien
- 20: Reifen (Lauffläche)
- 30: Auswerteelement
- 31: Antenne Auswerteelement
- 40: Funksignal
- 100: Reifen (Gesamt)
- 110: Reifenkarkasse
- 120: Profilelement

## Patentansprüche

1. Reifensensor zur Messung von Normalspannung- und Biegemomente, **dadurch gekennzeichnet dass** er sich im Inneren der Lauffläche des Reifens befindet und mindestens ein bruchsicheres Dünnfilmelement aus einem piezoelektrischen Polymer oder einem Dielektrikum zur Durchführung der Messung umfasst.

2. Reifensensor gemäß Anspruch 1, **dadurch gekennzeichnet dass** er als ein durchgehendes Band, rechteckig, rund oder als Streifen ausgebildet ist.

3. Sensorarray zur Messung von Normalspannung- und Biegemomente für den Einsatz in Fahrzeugreifen, **dadurch gekennzeichnet, dass** es mindestens einen Sensor in mindestens einem Reifen gemäß Anspruch 1 aufweist.

4. Reifensensor gemäß Anspruch 1, **dadurch gekennzeichnet dass** er ein Funkelement aufweist.

5. Auswerteelement für einen Reifensensor gemäß Anspruch 1 bis 4, **dadurch gekennzeichnet dass** es einen Sender zur Energieversorgung des Funkelementes, einen Empfänger zum Empfang der Sensordaten und der Sensoridentifikation und sowie eine Auswerteeinheit umfasst.

6. Baugruppe welche einen Reifensensor gemäß Anspruch1 und ein Auswerteelement gemäß Anspruch 5 umfasst.
